# EUROPEAN PATENT SPECIFICATION

(11) **EP 0 469 545 B1**
(45) Date of publication and mention of the grant of the patent: **09.10.1996**
(21) Application number: 91112793.4
(22) Date of filing: 30.07.1991
(51) Int. Cl.: C08G 18/18

(54) **Amine catalyst for producing polyurethane foams and process for producing polyurethane foams**
Aminkatalysator zur Herstellung von Polyurethanschäumen und Verfahren zur Herstellung dieser Schäume
Catalyseur d'amine pour la production de mousses de polyuréthane et procédé de production de mousses de polyuréthane

(30) Priority: 30.07.1990 JP 199268/90; 03.07.1991 JP 188280/91
(43) Date of publication of application: 05.02.1992
(73) Proprietor: Tosoh Corporation, Shinnanyo-shi, Yamaguchi-ken, 746 (JP)
(72) Inventor: Tamano, Yutaka, Tokuyama-shi, Yamaguchi-ken (JP); Ishida, Masaki, Kudamatsu-shi, Yamaguchi-ken (JP); Okuzono, Shuichi, Kudamatsu-shi, Yamaguchi-ken (JP)
(74) Representative: VOSSIUS & PARTNER

(56) References cited:
- EP-A- 0 000 389
- EP-A- 0 285 135
- DE-A- 1 569 118
- DE-C- 1 088 708
- FR-A- 2 312 519
- FR-A- 2 367 734
- GB-A- 2 094 784

## Description

The present invention relates to an amine catalyst for producing flexible, semi-rigid and rigid polyurethane foams, or elastomers comprising polyurethane foams. More particularly, the present invention relates to an amine catalyst which has a secondary hydroxyl group in the molecule and exhibits non-bleeding properties to the polyurethane resin which is excellent in moldability. It also relates to a process for the production of a polyurethane foam using the catalyst.

Polyurethane foam is usually produced from a polyol and a polyisocyanate mixture containing a catalyst, foaming agents(halogenated hydrocarbonsand/or water), and if necessary, other auxiliary agents,by instantaneously stirring and mixing them to promote foaming.

The polyurethane foam is advantageously used in materials for various articles because of its light weight and its excellent cushion property, anti-shock property, anti-vibration property, and other advantageous properties. Hitherto, amine catalysts such as triethylamine, N-ethylmorpholine, triethylenediamine and tetramethylhexamethylenediamine, have been employed as catalysts for producing these polyurethanes to achieve a good moldability of the resulting foams. However, it is known that the use of these amine catalysts encounters various problems when the catalysts are used in the production, for example, of interior articles of automobiles (such as instrument panels, seats, head rests and arm rests which are produced by using polyurethane foam together with other materials (such as polyvinylchloride resin, ABS resin and polycarbonate resin) either in a combined form (such as in foils, coatings and in border materials), or by being molded such that it will be integrated into these materials. For example, an amine catalyst remaining in a polyurethane foam may migrate to other materials which are in contact with the polyurethane foam. This will cause deterioration and discoloration of the resultant other materials, and hence it reduces the commercial value of the product.

So far, for solving these problems, the following processes have been proposed: a process employing an amine catalyst which has a reactive primary amino group or a secondary amino group in the molecule (Japanese Laid-Open Patent Application No. Sho 46-4846, Japanese Laid-Open Patent Application No. Sho 59-191743, Japanese Patent Publication No. Sho 61-31727); a process employing an amine catalyst which contains a reactive primary hydroxyl group in the molecule (Japanese Patent Publication No. Sho 57-14762) . These amine catalysts work in such a way that they accelerate the reaction which leads to the polyurethane foam formation, and at the same time they react with the raw material polyisocyanate due to the presence of reactive groups in the molecule so that they stay fixed to the polyurethane resin. Therefore, problems of deteriorated physical properties and discoloration of the resultant products can be avoided because the amine catalyst does not migrate to other materials in contact with the polyurethane foam. However, the amine catalysts having reactive groups lose their catalytic activity during the reaction if they are entrapped in the polyurethane resin. This results in an incompiete formation of the final polyurethane resin. Thus, problems of an increased percentage of reject products having voids in the polyurethane foam and a deteriorated moldability have been reported.

GB-A-2 094 784 discloses a catalyst including a structure having two tertiary amines linked by a carbon chain of three carbon atoms and a primary or secondary hydroxyl group.

For the production of articles from polyurethane foam either in combination with or molded to be integrated with other materials, such amine catalysts are desired which are of a non-bleeding type so that they do not cause a deterioration nor a discoloration of other materials which are brought into contact with the catalyst and, in addition, render an excellent moldability to the polyurethane.

The present inventors continued comprehensive investigations for amine catalysts which are suited for producing such a polyurethane and for a method for its production.

As the result, the present inventors have found that the claimed amine catalysts having a secondary hydroxyl group in the molecule exhibit non-bleeding properties in the polyurethane resin, lose less catalytic activity during the polyurethane formation reaction, and do not deteriorate nor discolor other materials in contact with the polyurethane foam when the catalyst is used for making products made of polyurethane foam by combining it or by molding it integrated with other materials. The present invention thus provides amine catalysts exhibiting non-bleeding properties in a polyurethane resin. They are advantageously used for producing a polyurethane foam with excellent moldability, and also in a process for producing polyurethane foams.
In particular , the present invention provides amine catalysts for producing polyurethane foams comprising a compound expressed by the following general formula (I) and a process for the production of the polyurethane foams therewith, 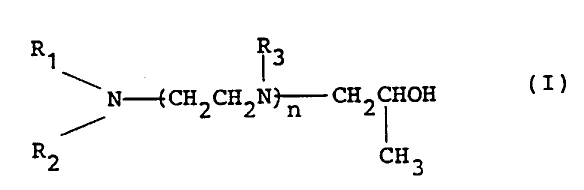 (in the formula, n is an integer from 1 to 3, and R₁, R₂ and R₃ respectively and independently stands for an alkyl group having 1 to 3 carbons).

The present invention will be explained in more detail below.

The amine catalyst of the present invention is a tertiary amine compound having a secondary hydroxyl group in the molecule expressed by the general formula (I) above.

The amine catalysts of the present invention include preferably N,N,N'-trimethyl-N'-(2-hydroxypropyl)ethylenediamine, N,N,N',N"-tetramethyl-N"-(2-hydroxypropyl )diethylenetriamine and N,N,N',N",N"'-penta-methyi-N"'-( 2-hydroxypropyl)triethylenetetramine. Among these, N,N,N'-trimethyl-N'-(2-hydroxypropyl)-ethylenediamine, and N,N,N',N"-tetramethyl-N"-(2-hydroxypropyl)-diethylenetriamine are more preferred.

These amine catalysts may be prepared according to a process which is known in the art. For example, the preparation may be performed by the Leuckart-Wallach reaction, as disclosed in U.S. Patent No. 4,026,840, starting from a corresponding alkanolamine, and by use of a reductive alkylation reaction as disclosed in West German Patent No. 2,618,580.

The amount of the amine catalyst of the present invention for producing polyurethane is in the range from 0.02 to 10 parts, more preferably 0.1 to 5 parts by weight based on 100 parts of the polyol. In addition, other known tertiary amine catalysts, organic carboxylic acid salts thereof, and organic tin compounds which are usually used as cocatalysts may be employed as auxiliary catalyst as long as the proper catalytic function of the catalysts of the present invention is not lost. Among the substances referred to above, triethylenediamine can be preferably used because it does not impair the good moldability of the amine catalyst of the present invention and does not deteriorate nor discolor the materials which said catalyst contacts for a long time. Particularly desirable is the combined use of the amine catalyst (I) of the present invention and triethylenediamine (II) in the ratio ((I)/(II)) by weight being not less than 0.75 and not larger than 12. In the process for producing polyurethane using the amine catalyst of the present invention, polyols, polyisocyanates, and foaming agents, stabilizers, and if necessary, other auxiliary agents which are hitherto known, may be employed.

Polyols include polyetherpolyols, polymer polyols, and polyesterpolyols having 2 or more reactive hydroxyl groups. The polyetherpolyols include, for example, polyhydric alcohols such as glycol, glycerin, pentaerythritol, and sucrose; and/or a polyetherpolyol obtained by adding ethylene oxide or propylene oxide to a mixture of aliphatic amine compounds such as ammonia, and ethyleneamine; aromatic amine compounds such as toluene diamine, and diphenylmethane-4,4'-diamine. The polymer polyol is exemplified by a reaction product of said polyetherpolyol with an ethylenic unsaturated monomer, such as butadiene, acrylonitrile, and styrene, the reaction being conducted in the presence of a radical polymerization catalyst. Polyesterpolyols include those which are produced from a dibasic acid and a polyhydric alcohol such as, for example, polyethyleneadipate and polyethyleneterephthalates which may include those products reclaimed from waste materials.

As for the polyisocyanates,known organic polyisocyanates may be employed including, for example, aromatic polyisocyanates such as toluene diisocyanate, diphenylmethane-4,4'-diisocyanate, polymerized isocyanates thereof; aliphatic polyisocyanates such as hexamethylenediisocyanate ; alicyclic polyisocyanates such as isophoronediisocyanate ; prepolymers with terminal isocyanate groups such as toluenediisocyanate prepolymers and diphenylmethane-4,4'-diisocyanate prepolymerswhich are obtained by the reaction of the above-mentioned substances with a polyol; denatured isocyanatessuch as carbodiimide denatured substances; and further mixed polyisocyanates thereof.

Foaming agents are exemplified by halogenated hydrocarbons of lower boiling points and/or water. Known halogenated methanes and halogenated ethanes may be used as halogenated hydrocarbons. Among them, chlorofluorocarbon compounds such as trichloromonofluoromethane (R-11), dichlorotrifluoroethane (R-123), dichloromonofluoroethane (R-141b), are preferred. The amount of the substances to be used is not particularly limited, but the amount of the chlorofluorocarbon compound to be used is usually not larger than 35 parts by weight, preferably 0 to 30 parts by weight, based on 100 parts of the polyol, and the amount of water to be used is not less than 2.0 parts, preferably 3.0 to 20.0 parts. The stabilizer is selected, for example, from non-ionic surfactants such as organopolysiloxane-polyoxyalkylene copolymers and silicone-glycol copolymers, or a mixture thereof. The amount of the stabilizer is not particularly critical, but usually 0 to 2.5 parts by weight are used per 100 parts by weight of polyol.

In the present invention, other auxiliary agents may be added if necessary. They include flame retardants, coloring agents, fillers, oxidation-preventors and ultraviolet ray screening agents.

The polyurethanes prepared by the use of the amine catalysts of the present invention include flexible foams, HR foams, semi-rigid foams, rigid foams, microcellular foams, and elastomers which are prepared by the conventional known one-shot method and the prepolymer method. Among these known processes, the process for producing a polyurethane foam by using a foaming agent which is processed in a combined form with other materials, such as foil, coating, or border material, or by molding integratedly with other materials is particularly preferred. Said other materials referred to above include resins such as polyvinylchloride resins, ABS resins, polycarbonate resins, metals, and glasses. Examples of applications of the product include interior articles of automobiles such as instrument panels, seats, head rests, arm rests, and door panels as well as packaging materials.

The amine catalyst of the present invention behaves as a catalyst of the non-bleeding type in the polyurethane resin because it has a secondary hydroxyl group in the molecule. Also its moldability is excellent since it suffers little from decrease in the catalytic activity during the polyurethane forming reaction, when compared with other reactive catalysts. The result is that the amine catalyst of the present invention, when it is used for the production of articles from the polyurethane foam in combination with, or by being molded integratedly with other materials, provides products with a lower rate of poor quality product formation and without deteriorating and discoloring other materials which are brought into contact with the polyurethane.

The present invention will be understood from the following description of examples and comparative examples, but the invention is not limited to them.

### Examples 1 to 4 and Comparative Examples 1 to 5

In the procedure for preparing semi-rigid foams using the formulation of starting materials as indicated below, respective catalysts were used in the Examples and Comparative Examples and foaming tests were conducted under predetermined foaming conditions. The estimation of the moldability of the resulting polyurethane foams and the discoloration tests of the vinyl chloride resin were carried out as indicated below.

Results are shown in Table 1.

### a. Formulation

| | (Parts by weight) | |
|---|---|---|
| Polyol | 1) | 100 |
| Water | | 2.8 |
| Cross-linking agent | 2) | 3.0 |
| Catalyst | 3) | Varied |
| Isocyanate | 4) | (NCO/OH = 1.05) |

| | | |
|---|---|---|
| 1) Polyetherpolyol, OHV = 33 mgKOH/g (FA-703), made by Sanyo Chemical Industries Co. Ltd.) | | |
| 2) Triethanolamine (made by Mitsui Toatsu Chemical Co. Ltd.) | | |
| 3) Catalysts used and explanation of abbreviations of the catalysts DMPA ; N,N,-Dimethyl-N-(2-hydroxypropyl)amine TMAEPA ; N,N,N'-Trimethyl-N"-(2-hydroxypropyl)ethylenediamine TMDTPA ; N,N,N',N"-Tetramethyl-N"-(2-hydroxypropyl)diethylenetriamine DMAPA ; N,N,-Dimethyl(3-aminopropyl)amine BDMAPA ; Bis(3-dimethylaminopropyl)amine TMAEEA ; N,N,N'-Trimethylaminoethylethanolamine TEDA-L33; 33% solution of triethylenediamine in dipropyleneglycol (TEDA-L33 made by Tosoh Corporation) TMHMDA ; Tetramethylhexamethylenediamine (TOYOCAT-MR, made by Tosoh Corporation) | | |
| 4) Crude MDI with the concentration of NCO = 31.0 % (MR-200 made by Nippon Polyurethane Industry, Ltd.) | | |

### b. Foaming conditions

| | |
|---|---|
| Temperature of starting material liquid | 25 ± 1°C |
| Stirring speed | 6000 rpm (for 7 seconds) |

### c. Items of measurement

Starting materials of polyurethane were placed in a 2 liter cup made of polyethylene at room temperature (20 to 25°C) and then foaming was performed. Reactivity, density of the foam, and moldability were measured.

### Reactivity

- Cream time;: Time before the start of foaming (in seconds)
- Gel time ;: Time for resinification (in seconds)
- Rise time ;: Time before the foam reaches its maximum foaming height (in seconds)

### Density of foam

Density was measured of a test specimen prepared by cutting the central portion of the foam in a size of 6 x 6 x 6 cm.

### Moldability

Voids generated at the bottom portion of a foam formed were observed and rated in 3 grades:

| | |
|---|---|
| Large voids | .... × |
| Small voids | .... Δ |
| No void | .... ○ |

### Discoloration test

A starting material of polyurethane was poured onto a sheet of polyvinylchloride resin (GA-20, made by Plus-tech Co.) placed at the bottom of an aluminum mold (with the dimension of 12 x 50 x 2 cm) which was adjusted to 40°C, to prepare a test piece for the discoloration test. The specimen was heated to 120°C in an oven, and the rate of discoloration after 200 hours was measured with a color meter (made by Nippon Denshoku Co.), to obtain the color difference value (ΔE; difference from the blank value).

As clearly seen in Table 1, the amine catalyst of the present invention exhibited a small value of discoloration and further improved moldability. On the other hand, the amine catalysts in Comparative Examples 1 to 3 showed worse moldability, though the discoloration values were small, while the amine catalysts in Comparative Examples 4 and 5 had large discoloration values. Thus, the catalysts in the Comparative Examples could not be used.

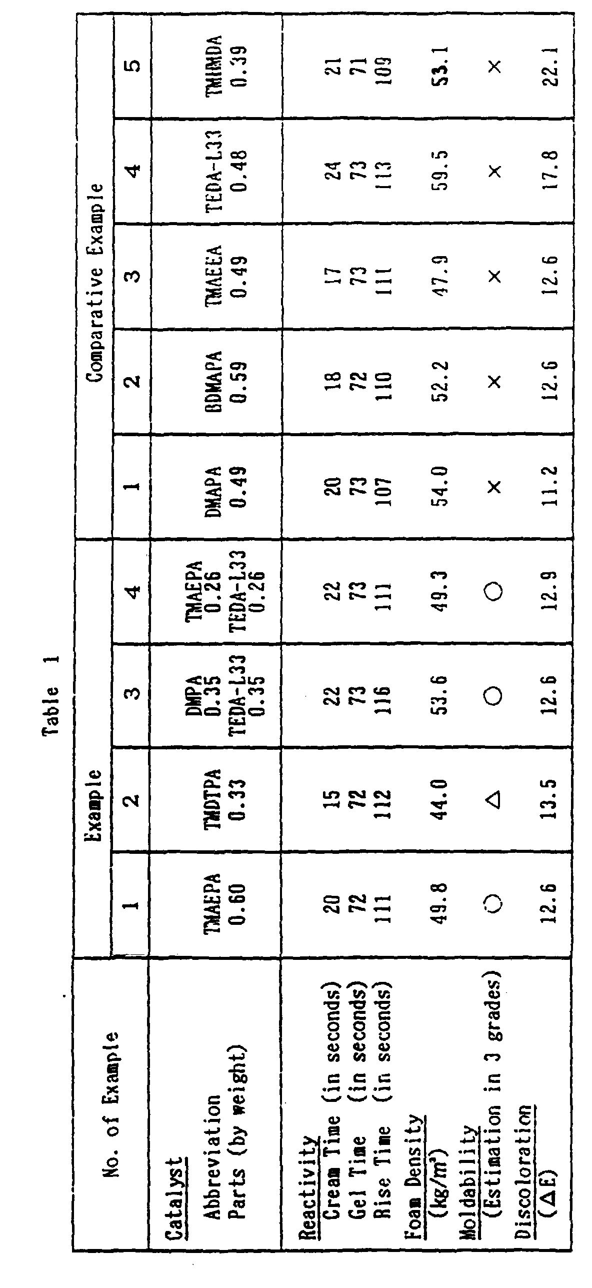

## Claims

1. An amine catalyst for producing polyurethane foams comprising a compound expressed by the following general formula (I): 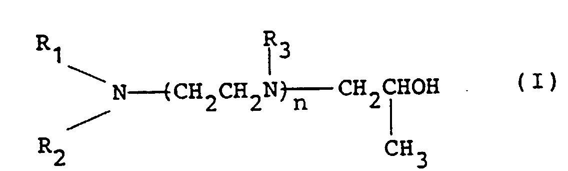 (in the formula, n is an integer from 1 to 3, and R₁, R₂, and R₃ respectively and independently stands for alkyl groups having 1 to 3 carbons).

2. Process for producing a polyurethane foam by reacting a polyol with a polyisocyanate in the presence of a catalyst and a foaming agent, comprising using the amine catalyst according to claim 1.

3. Process according to claim 2, wherein said polyurethane foam is further molded and processed such that it is combined with or integrated into other materials.

4. Process according to claim 2 or claim 3, wherein the foaming agent is water and/or a halogenated hydrocarbon.

5. Process according to claim 3 wherein said other material comprises one or more materials selected from polyvinylchloride resin, ABS resin, and polycarbonate resin.

## Patentansprüche

1. Aminkatalysator zur Herstellung eines Polyurethanschaums, umfassend eine Verbindung der folgenden allgemeinen Formel (I): 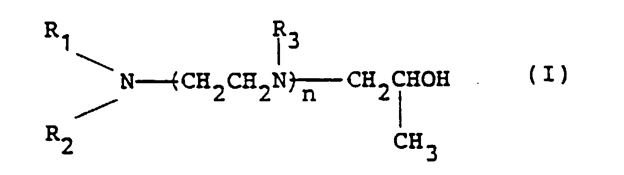 (in der Formel ist n eine ganze Zahl von 1 bis 3 und R₁, R₂ bzw. R₃ stehen unabhängig für Alkylreste mit 1 bis 3 Kohlenstoffatomen ).

2. Verfahren zur Herstellung eines Polyurethanschaums durch Reaktion eines Polyols mit einem Polyisocyanat in Gegenwart eines Katalysators und eines Schaumbildners, das die Verwendung des Aminkatalysators nach Anspruch 1 umfaßt.

3. Verfahren nach Anspruch 2, in dem der Polyurethanschaum weiter geformt und bearbeitet wird, in der Weise, daß er mit anderen Materialien kombiniert oder in sie integriert wird.

4. Verfahren nach Anspruch 2 oder Anspruch 3, in dem der Schaumbildner Wasser und/oder ein halogenierter Kohlenwasserstoff ist.

5. Verfahren nach Anspruch 3, in dem das andere Material ein oder mehrere Materialien umfaßt, die aus Polyvinylchloridharz, ABS-Harz und Polycarbonatharz ausgewählt sind.

## Revendications

1. Catalyseur d'amine destiné à la production d'une mousse de polyuréthane comprenant un composé exprimé par la formule générale suivante (I) : 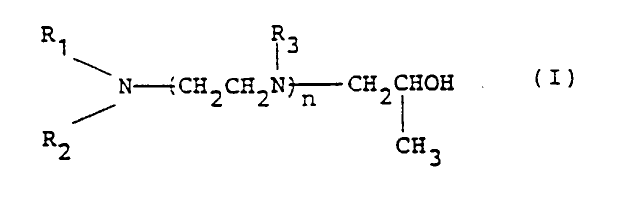 (dans la formule, n est un nombre entier de 1 à 3 et R₁, R₂ et R₃ représentent respectivement et indépendamment des groupes alkyle comportant 1 à 3 atomes de carbone).

2. Procédé de production d'une mousse de polyuréthane consistant à faire réagir un polyol avec un polyisocyanate en présence d'un catalyseur et d'un agent moussant, comprenant l'utilisation du catalyseur d'amine selon la revendication 1.

3. Procédé selon la revendication 2, dans lequel on moule ultérieurement ladite mousse de polyuréthane puis on la traite de manière à ce qu'elle soit combinée avec d'autres matériaux ou leur soit intégrée.

4. Procédé selon la revendication 2 ou 3, dans lequel l'agent moussant est l'eau et/ou un hydrocarbure halogéné.

5. Procédé selon la revendication 3, dans lequel ledit autre matériau comprend un ou plusieurs matériaux choisis dans le groupe constitué d'une résine de poly(chlorure de vinyle), d'une résine ABS et d'une résine de polycarbonate.
